# EUROPEAN PATENT APPLICATION

(11) **EP 2 693 833 A1**
(43) Date of publication of application: **05.02.2014**
(21) Application number: 12775991.8
(22) Date of filing: 25.04.2012
(51) Int. Cl.: H04W 88/02

(54) **STATUS SWITCHING METHOD, INACTIVITY TIMER STARTING METHOD, AND USER EQUIPMENT**

(30) Priority: 29.04.2011 CN 201110110472
(71) Applicant: Huawei Technologies Co., Ltd., Shenzhen, Guangdong 518129 (CN)
(72) Inventor: QUAN, Wei, Shenzhen Guangdong 518129 (CN); TANG, Ke, Shenzhen Guangdong 518129 (CN); HAN, Guanglin, Shenzhen Guangdong 518129 (CN); ZHANG, Jian, Shenzhen Guangdong 518129 (CN); WANG, Yu, Shenzhen Guangdong 518129 (CN)
(74) Representative: Goddar, Heinz J.
(86) International application number: PCT/CN2012/074627
(87) International publication number: WO 2012/146162

(57) **Abstract**

The present invention provides a state switching method, an inactivity timer starting method, and a user equipment. The state switching method includes: sending, by a user equipment, a scheduling request to a network side, and receiving a newly transmitted data uplink grant that is delivered by the network side according to the scheduling request; setting the user equipment to an inactive state after the user equipment sending data according to the uplink grant; and switching the user equipment to an active state after a set period arrives and/or after it is determined that the data is sent successfully. After the data is sent according to the newly transmitted data uplink grant, the user equipment is first set to the inactive state and then switched to the active state after the set period arrives and/or after it is determined that the data is sent successfully, which reduces power consumption of the UE and saves energy.

## Description

### CROSS-REFERENCE TO RELATED APPLICATIONS

This application claims priority to Chinese Patent Application No. CN 201110110472.9, filed with the Chinese Patent Office on April 29, 2011 and entitled "STATE SWITCHING METHOD, INACTIVITY TIMER STARTING METHOD AND USER EQUIPMENT", which is hereby incorporated by reference in its entirety.

### TECHNICAL FIELD

The present invention relates to the field of wireless communications user equipments, and in particular, to a state switching method, an inactivity timer starting method, and two types of user equipments.

### BACKGROUND

In an existing Long Term Evolution (Long Term Evolution, LTE) system, all user equipments (User Equipment, UE) connected to an evolved base station (evolved NodeB, eNB) share air interface resources. That is, the eNB allocates transmission resources to subordinate UEs dynamically in each transmission time interval (Transmission Time Interval, TTI) according to information such as data volumes of the UEs. In uplink data scheduling, a UE reports its buffered data volume to the eNB by sending a buffer status report (Buffer Status Report, BSR), thereby providing reference information for the eNB to perform uplink scheduling.

No matter whether the UE is currently active or inactive, when a regular (Regular) BSR is triggered by a need of the UE to send uplink data, if no uplink resource is available to send the BSR to the eNB, an SR will be sent over a scheduling request (Scheduling Request, SR) resource, and then the UE is active; after the UE receives an uplink grant (UL Grant), if the data scheduled by the UL Grant is newly transmitted data (the UL Grant for scheduling newly transmitted data is hereinafter referred to as "newly transmitted data UL Grant"), an inactivity timer (Inactivity Timer, IT) will be started or restarted; when the timer is running, the UE is active all along; and after the timer expires, the UE performs a discontinuous reception (Discontinuous Reception, DRX) operation.

The prior art has the following problems:

1) Upon receiving the newly transmitted data UL Grant, the UE starts an Inactivity Timer immediately to activate the UE, which leads to more power consumption; and

2) The Inactivity Timer is started early, and therefore expires early, so that the UE enters an inactive state early, which affects the timeliness of scheduling, and increases a data transmission delay.

### SUMMARY

In one aspect, a state switching method and a user equipment are provided to reduce power consumption of a UE.

The state switching method may include:
sending, by a user equipment, a scheduling request to a network side, and receiving a newly transmitted data uplink grant that is delivered by the network side according to the scheduling request;
setting the user equipment to an inactive state after the user equipment sending data according to the uplink grant; and
switching the user equipment to an active state after a set period arrives and/or after it is determined that the data is sent successfully.

The user equipment may include:
a sending module, configured to send a scheduling request to a network side, and send data according to a newly transmitted data uplink grant that is received by a receiving module;
the receiving module, configured to receive the newly transmitted data uplink grant that is delivered by the network side according to the scheduling request; and
a processing module, configured to: set the user equipment to an inactive state after the sending module sends the data; and switch the user equipment to an active state after a set period arrives and/or after it is determined that the data is sent successfully.

By using the state switching method and user equipment provided in one aspect of the present invention, after data is sent according to a newly transmitted data uplink grant, the user equipment is first set to an inactive state, and then switched to an active state after a set period arrives and/or after it is determined that the data is sent successfully, which reduces power consumption of the user equipment and saves energy.

In another aspect, an inactivity timer starting method and a user equipment are provided to reduce a data transmission delay of the user equipment.

The inactivity timer starting method may include:
sending, by a user equipment, a scheduling request to a network side, receiving a newly transmitted data uplink grant that is delivered by the network side according to the scheduling request, and sending data according to the uplink grant; and
starting an inactivity timer after a set period arrives and/or after it is determined that the data is sent successfully.

The user equipment may include:
a sending module, configured to send a scheduling request to a network side, and send data according to a newly transmitted data uplink grant that is received by a receiving module;
the receiving module, configured to receive the newly transmitted data uplink grant that is delivered by the network side according to the scheduling request; and
a processing module, configured to start an inactivity timer after a set period subsequent to the time when the sending module sends the data arrives and/or after it is determined that the data is sent successfully.

By using the inactivity timer starting method and user equipment provided in the other aspect of the present invention, the user equipment sends a scheduling request to the network side, receives a newly transmitted data uplink grant delivered by the network side according to the scheduling request, and sends data according to the uplink grant; and subsequently, an inactivity timer is started after a set period arrives and/or after it is determined that the data is sent successfully, thereby postponing the start time of the inactivity timer, preventing the user equipment from entering the inactive state early, and reducing the data transmission delay of the user equipment.

### BRIEF DESCRIPTION OF DRAWINGS

FIG. 1 is a flowchart of Method Embodiment 1 of the present invention;
FIG. 2 is a flowchart of Method Embodiment 2 of the present invention;
FIG. 3 is a flowchart of Method Embodiment 3 of the present invention;
FIG. 4 is a flowchart of Method Embodiment 4 of the present invention;
FIG. 5 is a flowchart of Method Embodiment 5 of the present invention;
FIG. 6 is a flowchart of Method Embodiment 6 of the present invention;
FIG. 7 is a flowchart of Method Embodiment 7 of the present invention;
FIG 8 is a flowchart of Method Embodiment 8 of the present invention;
FIG. 9 is a flowchart of Method Embodiment 9 of the present invention;
FIG 10 is a flowchart of Method Embodiment 14 of the present invention;
FIG 11 is a flowchart of Method Embodiment 15 of the present invention;
FIG. 12 is a flowchart of Method Embodiment 16 of the present invention;
FIG. 13 is a schematic structural diagram of User Equipment Embodiment 1 of the present invention;
FIG. 14 is a schematic structural diagram of User Equipment Embodiment 2 of the present invention;
FIG. 15 is a schematic structural diagram of User Equipment Embodiment 3 of the present invention;
FIG. 16 is a schematic structural diagram of User Equipment Embodiment 4 of the present invention;
FIG 17 is a schematic structural diagram of User Equipment Embodiment 5 of the present invention;
FIG. 18 is a schematic structural diagram of User Equipment Embodiment 9 of the present invention;
FIG. 19 is a schematic structural diagram of User Equipment Embodiment 10 of the present invention; and
FIG. 20 is a schematic structural diagram of User Equipment Embodiment 11 of the present invention.

### DESCRIPTION OF EMBODIMENTS

To make the objectives, technical solutions, and advantages of the present invention more comprehensible, the following further describes the present invention in detail with reference to the accompanying drawings.

The present invention provides a state switching method and an inactivity timer starting method. The state switching method is a method for saving power of a UE, and its specific embodiments include Method Embodiment 1, and Method Embodiment 4 to Method Embodiment 8; the inactivity timer starting method is a method for reducing a data transmission delay of a UE, and its specific embodiments include Method Embodiment 2 to Method Embodiment 15.

### Method Embodiment 1

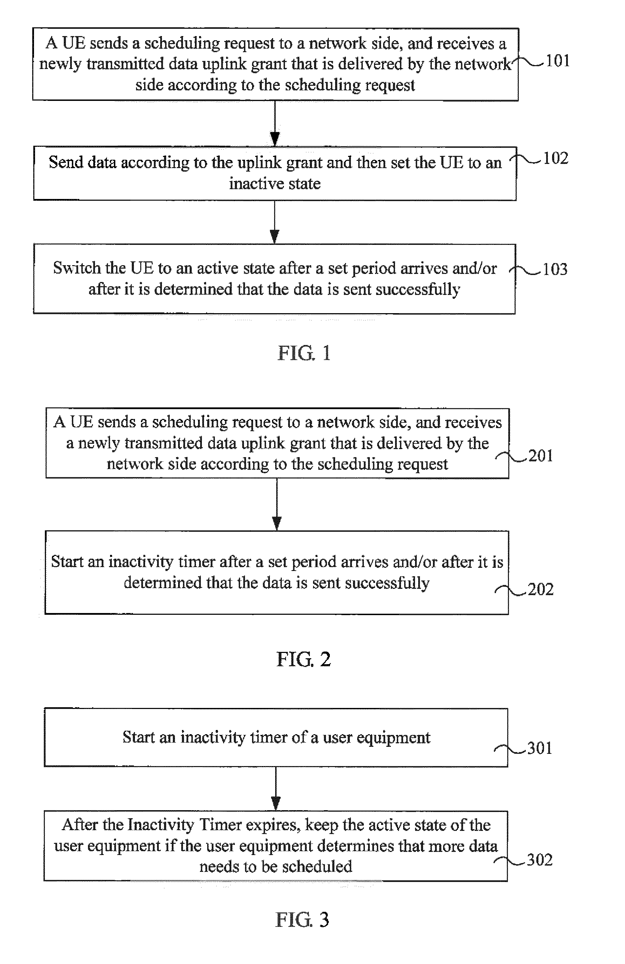

As shown in FIG. 1, a method for saving power of a UE provided in this embodiment includes the following steps:

Step 101: The UE sends a scheduling request (SR) to a network side, and receives a newly transmitted data uplink grant (UL Grant) that is delivered by the network side according to the scheduling request.

Step 102: Send data according to the UL Grant, and then set the UE to an inactive state.

Step 103: Switch the UE to an active state after a set period arrives and/or after it is determined that the data is sent successfully.

The set period may be implemented by setting a first timer. For ease of description, the first timer is called an IT-disabled timer; therefore, when the UE is set to an inactive state, the IT-disabled timer is started; and the set period arriving is that the IT-disabled timer expires.

After the IT-disabled timer is started but before it expires, the method may further include: if the UE determines that the data is sent unsuccessfully, restarting the IT-disabled timer to prolong the inactive state of the UE and therefore reduce power consumption.

After the set period arrives and/or after it is determined that the data is sent successfully, the method may further include: starting a second timer, that is, an Inactivity Timer; and switching the UE to an inactive state after the Inactivity Timer expires. It should be noted that, the description herein is from the perspective of the Inactivity Timer; and after the Inactivity Timer expires, if there is another timer or an event that requires the UE to be in the active state, the UE still needs to be in the active state. This is not directly related to the present invention and is therefore not detailed herein any further.

When the UE is set to the inactive state, a value of a state flag may be set to True. For ease of description, the state flag is hereafter referred to as an IT-disabled state flag. Therefore, after it is determined that the uplink data is sent successfully, the IT-disabled state flag is set to False, and the Inactivity Timer is started.

In this embodiment, after the data is sent according to the newly transmitted data uplink grant, the user equipment is first set to the inactive state and then switched to the active state after the set period arrives and/or after it is determined that the data is sent successfully, which reduces power consumption of the user equipment and saves energy.

### Method Embodiment 2

As shown in FIG 2, a method for reducing a data transmission delay of a UE in this embodiment includes the following steps:

Step 201: The UE sends an SR to a network side, receives a newly transmitted data UL Grant that is delivered by the network side according to the scheduling request, and sends data according to the UL Grant.

Step 202: Start an Inactivity Timer after a set period arrives and/or after it is determined that the data is sent successfully.

In this embodiment, the Inactivity Timer is not started immediately after the data is sent according to the UL Grant. Instead, the Inactivity Timer is started after the set period arrives and/or after it is determined that the uplink data is sent successfully.

The set period may be implemented by using a first timer. For ease of description, the first timer is called an IT-disabled timer. Therefore, after the data is sent, the IT-disabled timer is started; and the set period arriving is that the IT-disabled timer expires.

After the IT-disabled timer is started but before it expires, the method may further include: restarting the IT-disabled timer if the UE determines that the data is sent unsuccessfully.

After the data is sent, a value of a state flag may be set to True. For ease of description, the state flag is hereafter referred to as an IT-disabled state flag; therefore, after it is determined that the uplink data is sent successfully, the IT-disabled state flag is set to False, and the Inactivity Timer is started.

In this embodiment, the user equipment sends a scheduling request to the network side, receives a newly transmitted data uplink grant delivered by the network side according to the scheduling request, and sends data according to the uplink grant; subsequently, the inactivity timer is started after the set period arrives and/or after it is determined that the data is sent successfully, thereby postponing the start time of the inactivity timer, preventing the user equipment from entering the inactive state early, and reducing the data transmission delay of the user equipment.

### Method Embodiment 3

As shown in FIG. 3, a method for reducing a data transmission delay of a UE in this embodiment includes the following steps:

Step 301: Start an Inactivity Timer of the UE.

Starting the Inactivity Timer in this step may be starting the Inactivity Timer after the UE receives a UL Grant according to the prior art, or may be starting the Inactivity Timer according to any one of Embodiments 4 to 13 of the present invention.

Step 302: After the Inactivity Timer expires, keep the active state of the UE if the UE determines that more data needs to be scheduled.

In step 302, the UE performs a DRX Cycle if the UE determines that no data needs to be scheduled.

In step 302, the Inactivity Timer may be restarted if the UE determines that more data needs to be scheduled. After the Inactivity Timer is restarted, step 302 may be performed again.

In addition, after the Inactivity Timer expires, the UE determines whether an Inactivity Timer restart counter reaches a set maximum value. If yes, the UE performs a DRX Cycle; and if no, the UE restarts the Inactivity Timer and adds 1 to the value of the Inactivity Timer restart counter.

In step 302, if the UE determines that more data needs to be scheduled, the UE may start a set third timer rather than restart the Inactivity Timer, where the third timer is hereinafter referred to as an Inactivity Timer restart timer. Before this timer expires, if the UE receives an UL Grant or DL Assignment that indicates newly transmitted uplink data, the UE stops the new timer and starts the Inactivity Timer; if the Inactivity Timer restart timer expires, the UE performs a DRX Cycle.

In this embodiment, when the Inactivity Timer expires but the UE still has data that needs to be sent, the UE remains active, thereby prolonging the active state of the UE, reducing the failure in scheduling data of the UE in time when the UE enters the inactive state after the Inactivity Timer expires, and reducing the occurrence of a long data transmission delay when data is not scheduled in time.

### Method Embodiment 4

In this embodiment, an IT-disabled state flag is configured in a UE, and the flag has two values: True and False. The initial value of the flag is False. Specifically, when the flag is True, an Inactivity Timer cannot be triggered by a newly transmitted data UL Grant; if the Inactivity Timer is already running before the flag is set to True, the Inactivity Timer may go on running until the Inactivity Timer expires or stops or is restarted as triggered by a condition other than a newly transmitted data UL Grant. When the flag is False, the Inactivity Timer can be triggered by a newly transmitted data UL Grant. However, in practical applications, two other different values may be assigned to the flag, corresponding to the two states respectively. The state flag may be configured fixedly in a protocol, or configured by the network side together with other DRX parameters in the UE through an RRC message (such as a radio resource control connection reconfiguration message, RRC Connection Reconfiguration); or configured by the network side for the UE through a MAC-layer message (such as media access control sublayer control element, Media Access Control Element, MAC CE), or a physical layer message (such as a physical downlink control channel, Physical Downlink Control Channel, PDCCH), or the like. The foregoing messages are only examples. In practice, a new RRC message, a new MAC message, or a new physical layer message may be added, or a new information element (Information Element, IE) may be added to an existing message to accomplish this purpose, which is not limited herein.

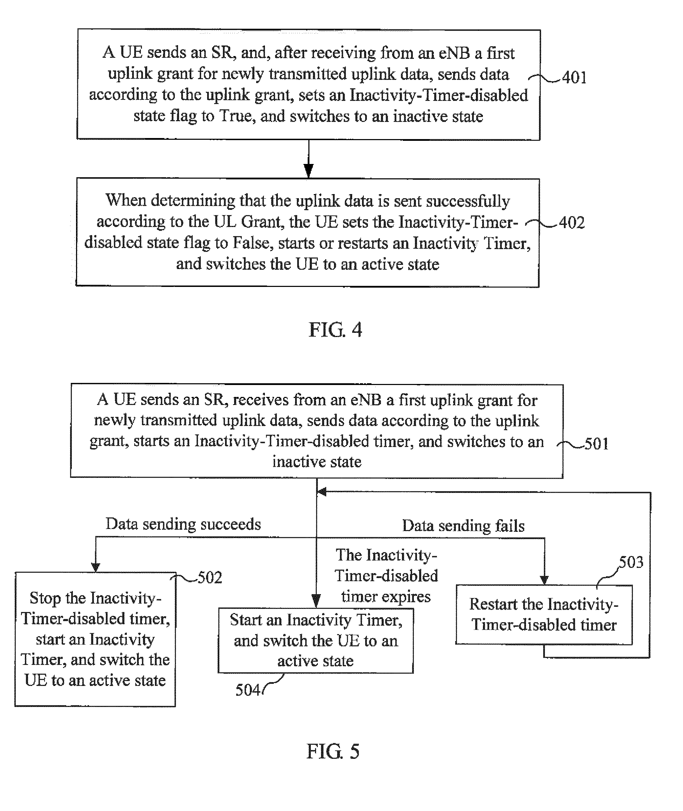

As shown in FIG 4, a specific implementation process of this embodiment includes the following steps:

Step 401: The UE sends an SR, and, after receiving from an eNB a first uplink grant (Uplink Grant, UL Grant) used for newly transmitted uplink data, sends data according to the uplink grant.

The uplink data generally includes a Regular BSR and upper-layer data (such as a Media Access Control sublayer service data unit, a Media Access Control Service Data Unit, MAC SDU) that needs to be transmitted by the UE, and the IT-disabled state flag is set to True. That is, although the newly transmitted data uplink grant is received, the UE still refrains from starting the Inactivity Timer, and the UE switches to an inactive state to stop monitoring the PDCCH.

It should be noted that in this step, the "True" setting of the state flag imposes limitation specifically to only an Inactivity Timer triggered by a newly transmitted data UL Grant but not an Inactivity Timer triggered by a newly transmitted data DL Assignment. In addition, if the Inactivity Timer is already running before the flag is set to True, the Inactivity Timer may go on running when the flag is True until the Inactivity Timer expires or stops or is restarted as triggered by a condition other than a newly transmitted data UL Grant.

All embodiments of the present invention, including this embodiment, are not limited to a scenario where a UE needs to send a Regular BSR and thereby an SR is triggered. The embodiment of the present invention may be applied in any other scenarios where a UL Grant is received after an SR is transmitted.

Step 402: After the UE confirms successful sending of the uplink data according to the UL Grant, for example, after it receives an acknowledgement (ACK) sent by the eNB or receives a newly transmitted data UL Grant or DL Assignment, the UE sets the IT-disabled state flag to False, starts the Inactivity Timer, switches to an active state, and monitors the PDCCH.

After the UE confirms failure in sending the uplink data according to the UL Grant, for example, after it receives a negative acknowledgement (NACK) sent by the eNB, the UE does not perform any operation on the IT-disabled state flag but keeps its value True, remains inactive until receiving the messages sent by the eNB to the UE in step 402, and performs step 402.

The function provided by using the IT-disabled state flag may be optional. That is, it may be configured, for example, configured for the UE in a manner described in the first paragraph of this embodiment, so that the UE decides whether to use the function. For example, when the system load of the eNB is heavy, it is possible that the data of the UE is not scheduled in time. In this case, the eNB may configure the function for the UE, so that the UE is more energy-efficient and stays active for subsequent scheduling, and thereby the UE can be scheduled in time. The function may be enabled or disabled by default.

### Method Embodiment 5

In this embodiment, an IT-disabled timer (Timer) is set for a DXR-configured UE. When the timer is running, an Inactivity Timer cannot be triggered by a newly transmitted data UL Grant; if the Inactivity Timer is already running before this timer runs, the Inactivity Timer can go on running until the Inactivity Timer expires or stops or is restarted as triggered by a condition other than a newly transmitted data UL Grant; when the timer is not running, the Inactivity Timer can be triggered by a newly transmitted data UL Grant. The duration of the timer may be set to a round trip time (Round Trip Time, RTT). In an LTE system, the RTT is 8ms, that is, 8 subframes or 8 transmission time intervals (Transmission Time Interval, TTI); optionally, the timer may also be set to another time length value. The duration of the IT-disabled timer may be configured fixed according to a protocol, or configured together with other DRX parameters by using an RRC message, or configured by using a MAC layer message, a physical layer message, or the like. For specific implementation modes, reference may be made to the configuration mode in Embodiment 1, and no repeated description is given herein.

As shown in FIG. 5, a specific implementation process of this embodiment includes the following steps:

Step 501: The UE sends an SR, and, after receiving from an eNB a first uplink grant (UL Grant) used for newly transmitted uplink data, sends data according to the uplink grant.

The uplink data generally includes a Regular BSR and upper-layer data (such as Media Access Control sublayer service data unit, Media Access Control Service Data Unit, MAC SDU) that needs to be transmitted by the UE. An IT-disabled timer is started, and the UE switches to an inactive state, and stops monitoring the PDCCH.

Step 502: If the UE confirms successful sending of the uplink data according to the UL Grant, for example, after it receives an acknowledgement (ACK) sent by the eNB or receives a newly transmitted data UL Grant or DL Assignment, the UE stops the IT-disabled timer, starts an Inactivity Timer, switches to an active state, and monitors the PDCCH.

It should be noted that in this step, the IT-disabled timer imposes limitation specifically to only an Inactivity Timer triggered by a newly transmitted data UL Grant but not an Inactivity Timer triggered by a newly transmitted data DL Assignment. If the Inactivity Timer is already running before this timer runs, the Inactivity Timer can go on running until the Inactivity Timer expires or stops or is restarted as triggered by a condition other than a newly transmitted data UL Grant; when the timer is not running, the Inactivity Timer may be triggered by a newly transmitted data UL Grant.

Step 503: If the UE confirms failure in sending the uplink data (including BSR) according to the UL Grant, for example, after it receives a negative acknowledgement (NACK) sent by the eNB, the UE restarts the IT-disabled timer, switches to an active state, and monitors the PDCCH.

In step 503, after the IT-disabled timer is restarted, upon occurrence of a condition of stopping the IT-disabled timer, or a condition of restarting the IT-disabled timer, or expiry of the IT-disabled timer, as described in step 502, 503, or 504, a corresponding step is performed.

Step 504: If the IT-disabled timer expires, the UE starts the Inactivity Timer, switches to an active state, and monitors the PDCCH.

The function may be optional, that is, whether to use the function is configurable. The function may be enabled or disabled by default. For example, when the system load of the eNB is heavy, it is possible that the UE data is not scheduled in time. In this case, the eNB may configure the function for the UE, so that the UE is more energy-efficient and stays active for subsequent scheduling, and thereby the UE can be scheduled in time.

### Method Embodiment 6

Similar to Embodiment 5, this embodiment applies an IT-disabled timer to a DXR-configured UE. The configuration of the duration of the timer and the configuration to enable or disable the corresponding functions of the timer are the same as those in Embodiment 5.

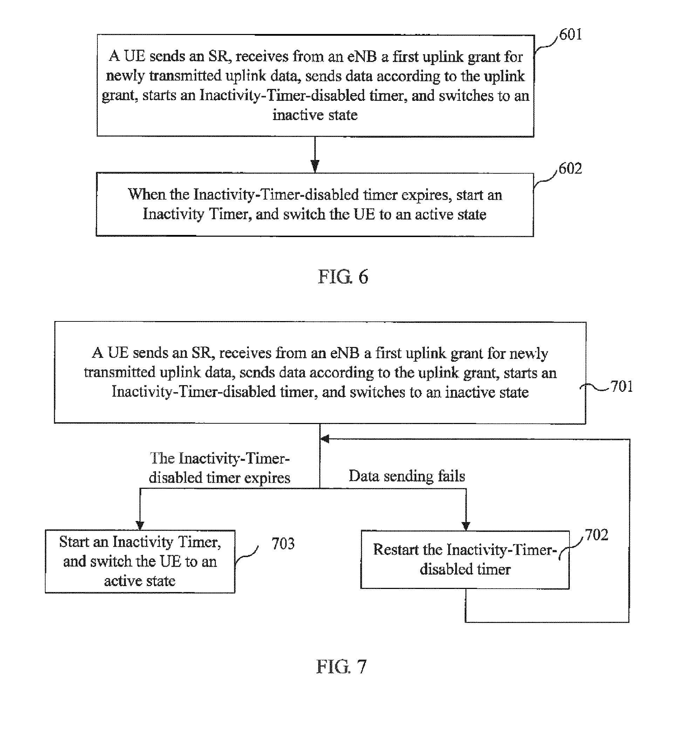

As shown in FIG. 6, a specific implementation process of this embodiment includes the following steps:

Step 601: The UE sends an SR, and, after receiving from an eNB a first uplink grant (UL Grant) used for newly transmitted uplink data, sends data according to the uplink grant, starts an IT-disabled timer, and switches to an inactive state.

Details of step 601 are the same as step 501, and are hence not repeated herein any further.

Step 602: After the IT-disabled timer expires, start an Inactivity Timer, and switch the UE to an active state.

### Method Embodiment 7

Similar to Embodiment 5, this embodiment applies an IT-disabled timer to a DXR-configured UE. The configuration of the duration of the timer and the configuration to enable or disable the corresponding functions of the timer are the same as those in Embodiment 5.

As shown in FIG. 7, a specific implementation process of this embodiment includes the following steps:

Step 701: The UE sends an SR, and, after receiving from an eNB a first uplink grant (UL Grant) used for newly transmitted uplink data, sends data according to the uplink grant, starts an IT-disabled timer, and switches to an inactive state.

Details of step 701 are the same as step 501, and are hence not repeated herein any further.

Step 702: If the UE confirms failure in sending the uplink data (including BSR) according to the UL Grant, for example, after it receives a negative acknowledgement (NACK) sent by the eNB, the UE restarts the IT-disabled timer. Subsequently, if the UE confirms failure in sending the uplink data again before expiry of the IT-disabled timer, the UE goes back to perform this step; and if determining expiry of the IT-disabled timer, the UE performs step 703.

Step 703: If the IT-disabled timer expires, start the Inactivity Timer, and switch the UE to an active state.

### Method Embodiment 8

Similar to Embodiment 5, this embodiment applies an IT-disabled timer to a DXR-configured UE. The configuration of the duration of the timer and the configuration to enable or disable the corresponding functions of the timer are the same as those in Embodiment 5.

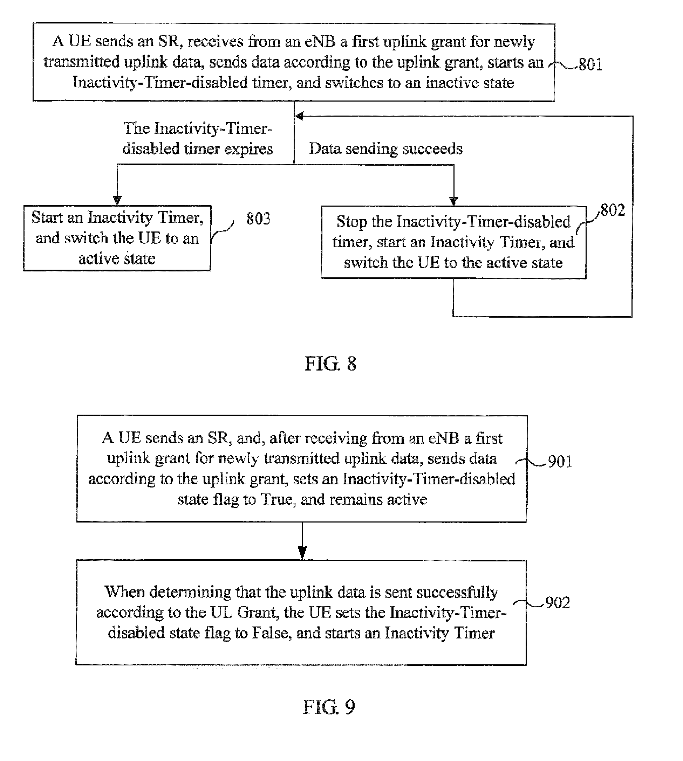

As shown in FIG 8, a specific implementation process of this embodiment includes the following steps:

Step 801: The UE sends an SR, and, after receiving from an eNB a first uplink grant (UL Grant) used for newly transmitted uplink data, sends data according to the uplink grant, starts an IT-disabled timer, and switches to an inactive state.

Details of step 801 are the same as step 501, and are hence not repeated herein any further.

IT disabling step 802: If the UE confirms successful sending of the uplink data according to the UL Grant, for example, after it receives an acknowledgement (ACK) sent by the eNB or receives a newly transmitted data UL Grant or DL Assignment, the UE stops the IT-disabled timer, starts an Inactivity Timer, and switches to an active state.

Step 803: If the IT-disabled timer expires, start the Inactivity Timer, and switch the UE to an active state.

### Method Embodiments 9 to 13

Method Embodiments 9 to 13 correspond to Method Embodiments 4 to 8 respectively, and differ from Method Embodiments 4 to 8 in that, when the value of the IT-disabled state flag is True and in a process of starting the IT-disabled timer, the UE is still active and monitors the PDCCH channel.

The following describes only Embodiment 9 as an example with respect to the difference:

As shown in FIG. 9, a specific implementation process of Embodiment 9 includes the following steps:

Step 901: The UE sends an SR, and, after receiving, from an eNB, a first uplink grant (UL Grant) used for newly transmitted uplink data, sends data according to the uplink grant.

The uplink data generally includes a Regular BSR and upper-layer data (such as a Media Access Control sublayer service data unit, a Media Access Control Service Data Unit, MAC SDU) that needs to be transmitted by the UE, and an IT-disabled state flag is set to True. In this step, the UE does not change its state, that is, it remains active.

Step 902: After the UE confirms successful sending of the uplink data according to the UL Grant, for example, after it receives an acknowledgement (ACK) sent by the eNB or receives a newly transmitted data UL Grant or DL Assignment, the UE sets the state flag to False, and starts or restarts an Inactivity Timer.

After the UE confirms failure in sending the uplink data according to the UL Grant, for example, after it receives a negative acknowledgement (NACK) sent by the eNB, the UE does not perform any operation on the IT-disabled state flag but keeps its value True until receiving one of the messages sent by the eNB to the UE in step 902, and then performs corresponding operations in step 902.

In addition, in Method Embodiments 9 to 13, if the UE determines successful sending of the uplink data based on a DL Assignment, because the Inactivity Timer has been started before, the corresponding operation on the Inactivity Timer is a restart.

### Method Embodiment 14

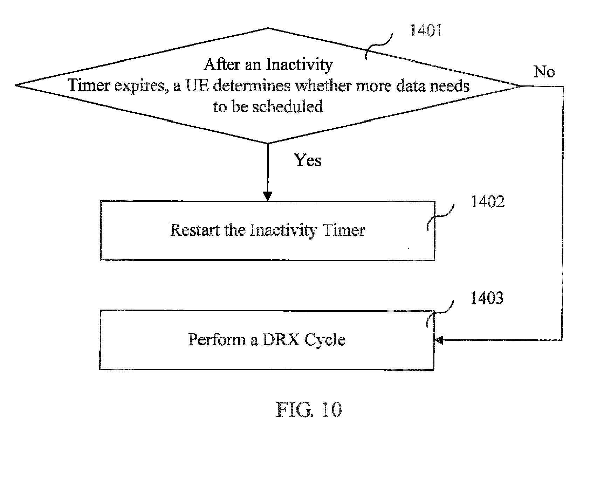

This embodiment is applicable after the UE receives a UL Grant message sent by an eNB, that is, in a scenario where an Inactivity Timer is started, and also applicable in a scenario where an Inactivity Timer is started according to each of the foregoing embodiments, and primarily relates to a technical solution after the Inactivity Timer is started. Specifically, as shown in FIG. 10, after the Inactivity Timer is started, this embodiment includes the following steps:

Step 1401: After the Inactivity Timer expires, the UE determines whether more data needs to be scheduled; if yes, performs step 1402; and if no, performs step 1403.

Step 1402: The UE restarts the Inactivity Timer.

Step 1403: The UE performs a DRX Cycle.

In step 1403, if Short DRX is configured, Short DRX is performed; or else Long DRX is performed.

### Method Embodiment 15

This embodiment is applied in the same application scenario as Method Embodiment 14, and also primarily relates to a technical solution after an Inactivity Timer is started. A difference from Embodiment 14 is: In this embodiment, the Inactivity Timer may be restarted repeatedly, and an Inactivity Timer restart counter is set to count the number of restarts of the Inactivity Timer; and no further restart is performed after the number of restarts reaches a set maximum value.

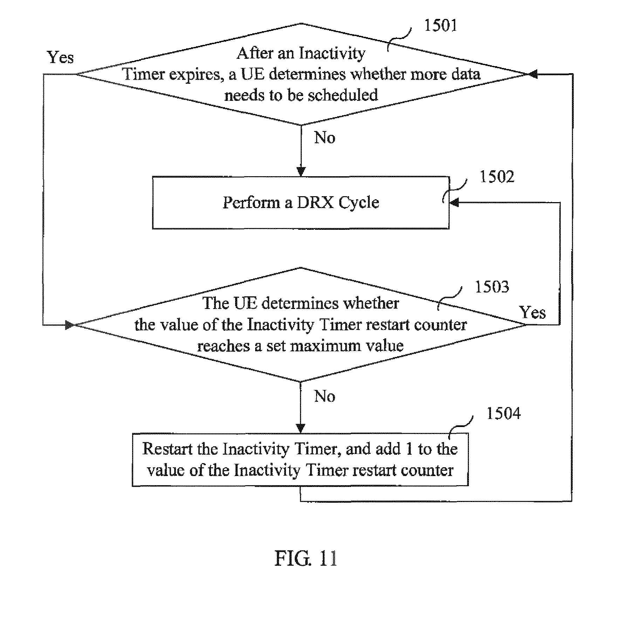

Specifically, as shown in FIG 11, after the Inactivity Timer is started, this embodiment includes the following steps:

Step 1501: After the Inactivity Timer expires, the UE determines whether more data needs to be scheduled; if no, performs step 1502; and if yes, performs step 1503.

Step 1502: The UE performs a DRX Cycle, that is, performs Short DRX if Short DRX is configured; or else, performs Long DRX.

Step 1503: The UE determines whether the value of the Inactivity Timer restart counter reaches the set maximum value. The maximum value may be set fixedly according to a protocol, or configured by using an RRC message or a MAC layer message or a physical layer message. For a detailed implementation mode, reference may be made to Method Embodiment 4, and no repeated description is given herein. If the value reaches the maximum value, step 1502 is performed; and if the value of the Inactivity Timer restart counter does not reach the set maximum value, step 1504 is performed.

Step 1504: Restart the Inactivity Timer, add 1 to the set value of the Inactivity Timer restart counter, and then go back to perform step 1501.

### Method Embodiment 16

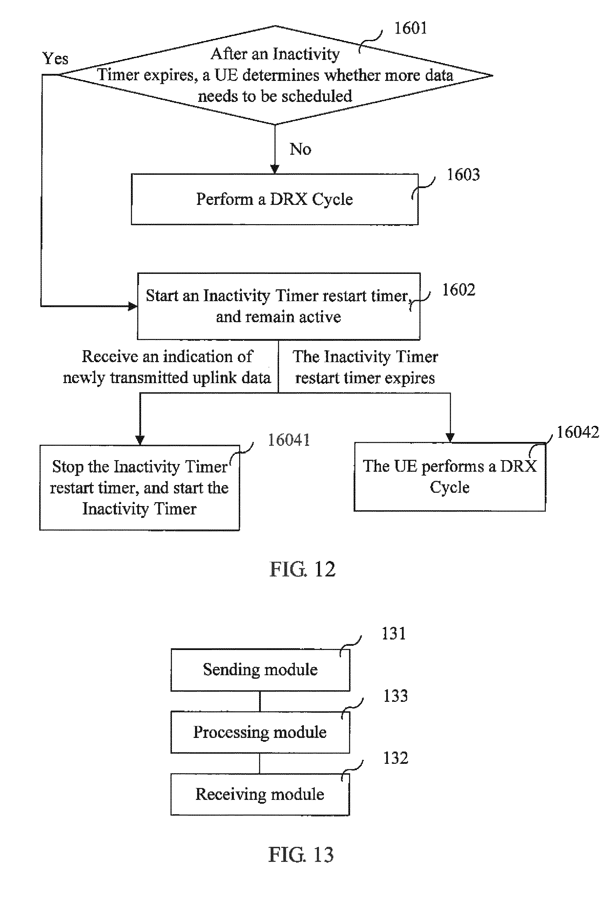

This embodiment is applied in the same application scenario as Method Embodiment 14, and also primarily relates to a technical solution after an Inactivity Timer is started. Specifically, as shown in FIG 12, after the Inactivity Timer is started, this embodiment includes the following steps:

Step 1601: After the Inactivity Timer expires, the UE determines whether more data needs to be scheduled; if yes, performs step 1602; and if no, performs step 1603.

Step 1602: The UE starts an Inactivity Timer restart timer, remains active, and then performs step 16041 or 16042.

Step 1603: The UE performs a DRX Cycle, that is, performs a Short DRX if Short DRX is configured; or else, performs Long DRX.

Step 16041: If the UE receives an UL Grant or a DL Assignment that indicates newly transmitted uplink data when the Inactivity Timer restart timer is running, the UE stops the Inactivity Timer restart timer, and starts the Inactivity Timer.

After the Inactivity Timer started in this step expires, the step where the UE determines whether more data needs to be scheduled and subsequent steps may still be performed according to step 1601.

Step 16042: If the Inactivity Timer restart timer expires, the UE performs a DRX Cycle, that is, performs Short DRX if Short DRX is configured; or else performs Long DRX.

Before receiving a BSR of the UE, the eNB is unaware of the amount of data buffered in the UE, and generally does not schedule more data transmitting resources for the UE. Therefore, the UE generally receives no scheduling command when being active. In addition, under different system loads, the eNB may respond to the BSR reported by the UE at different speeds. When the load is high, the response speed of the eNB is slow. Therefore, futile power consumption occurs if the UE stays active after sending the SR. In the foregoing embodiments of the method for saving power of a UE, after the UE sends an SR, and receiving a newly transmitted data UL Grant sent by the network side according to the SR, the UE does not start an Inactivity Timer immediately, but first switches to an inactive state, and then starts the Inactivity Timer to switch the UE to an active state after the uplink data is sent successfully or the set period arrives. Because the UE is first switched to the inactive state, the power consumption of the UE is reduced, and energy is saved.

In the prior art, the Inactivity Timer starts up early and expires early, which makes the UE enter the inactive state early, thereby affecting the timeliness of scheduling and increasing the data transmission delay. In addition, when the UE always has data to be sent, the eNB can hardly schedule the UE data in time due to the system load. In this case, the UE may enter the inactive state due to expiry of the Inactivity Timer, which affects the timeliness of scheduling and increases the data transmission delay. In the foregoing method embodiments for reducing a data transmission delay of a UE, a timer or a flag or the like is set to postpone the start time of the Inactivity Timer, or, when the Inactivity Timer expires but more data of the UE still needs to be sent, the Inactivity Timer is restarted or a new timer is started, thereby prolonging the active state of the UE in the data transmitting process, reducing the failure in scheduling data of the UE in time when the UE enters the inactive state after the Inactivity Timer expires, and reducing the occurrence of a long data transmission delay when the data is not scheduled in time. In addition, in the foregoing embodiments of the present invention, a maximum number of restarts of the Inactivity Timer may be set to prolong the active state of the UE and reduce power consumption of the UE.

Persons of ordinary skill in the art should understand that all or a part of the steps in the method embodiments may be implemented by a relevant hardware instructed by a computer program. The program may be stored in a computer readable storage medium. When the program is executed, the program may perform content of the foregoing embodiments of the present invention. The storage medium may be a ROM/RAM, a magnetic disk, a CD-ROM, or the like.

The present invention further provides a user equipment for radio communications, and its embodiments include the following:

### User Equipment Embodiment 1

The user equipment provided in this embodiment can save power. As shown in FIG 13, the user equipment provided in this embodiment includes:
a sending module 131, configured to send a scheduling request to a network side, and send data according to a newly transmitted data uplink grant that is received by a receiving module 132;
the receiving module 132, configured to receive the newly transmitted data uplink grant that is delivered by the network side according to the scheduling request; and
a processing module 133, configured to: set the UE to an inactive state after the sending module 131 sends the data; and switch the UE to an active state after a set period arrives and/or after it is determined that the data is sent successfully.

In this embodiment, the processing module 133 may be a processor. When implementing the foregoing solution, the processor may work according to the embodiments of the power-saving method, where the data receiving is undertaken by the receiving module 132 and the data sending is undertaken by the sending module 131, which are not repeated herein.

In this embodiment, after the data is sent according to the newly transmitted data uplink grant, the processing module 133 first sets the user equipment to the inactive state; and then switches the user equipment to the active state after the set period arrives and/or after it is determined that the data is sent successfully, which reduces power consumption of the user equipment and saves energy.

### User Equipment Embodiment 2

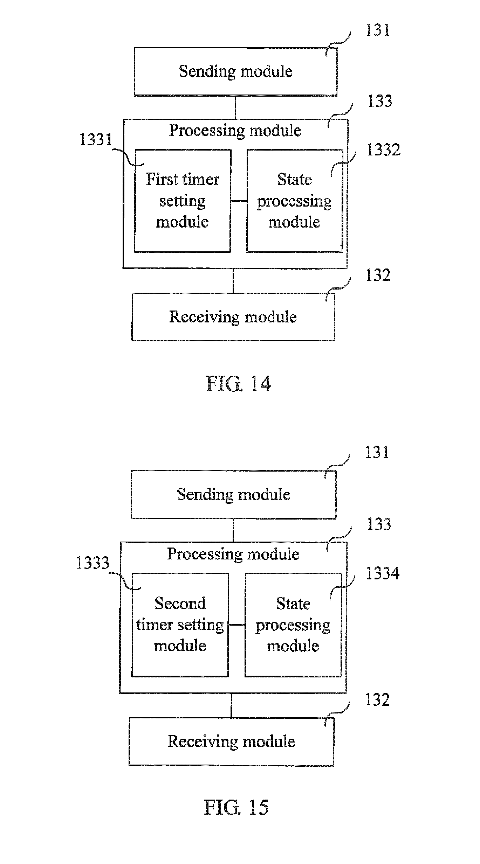

The user equipment provided in this embodiment can also save power. As shown in FIG. 14, the user equipment provided in this embodiment includes:
a sending module 131, configured to send a scheduling request to a network side, and send data according to a newly transmitted data uplink grant that is received by a receiving module 132;
the receiving module 132, configured to receive the newly transmitted data uplink grant that is delivered by the network side according to the scheduling request; and
a processing module 133, specifically including:
   a first timer setting module 1331, configured to: after the sending module sends the data, start a first timer, that is, an IT-disabled timer; and, after the IT-disabled timer expires, notify a state processing module 1332; and
   the state processing module 1332, configured to: set the UE to an inactive state after the sending module sends the data; and switch the UE to an active state after receiving an IT-disabled timer expiry notification from the first timer setting module and/or after it is determined that the data is sent successfully.

The first timer setting module 1331 is further configured to restart the first timer after it is determined that the data is sent unsuccessfully.

In this embodiment, when the first timer setting module 1331 and the processing module 1332 implement the foregoing solution, reference may be made to the corresponding solutions in the embodiments of the power-saving method, where the data receiving is undertaken by the receiving module 132 and the data sending is undertaken by the sending module 131, which are not repeated herein.

### User Equipment Embodiment 3

The user equipment provided in this embodiment can also save power. As shown in FIG. 15, the user equipment provided in this embodiment includes:
a sending module 131, configured to send a scheduling request to a network side, and send data according to a newly transmitted data uplink grant that is received by a receiving module 132;
the receiving module 132, configured to receive the newly transmitted data uplink grant that is delivered by the network side according to the scheduling request; and
a processing module 133, specifically including:
   a second timer setting module 1333, configured to: after a set period arrives and/or after it is determined that the data is sent successfully, start a second timer, that is, an Inactivity Timer; and, after the second timer expires, notify a state processing module 1334; and
   the state processing module 1334, configured to: set the UE to an inactive state after the sending module 131 sends the data; switch the UE to an active state after the set period arrives and/or after it is determined that the data is sent successfully; and switch the UE to the inactive state after receiving a second timer expiry notification from the second timer setting module 1332.

In this embodiment, when the second timer setting module 1332 and the state processing module 1334 implement the foregoing solution, reference may be made to the corresponding solutions in the embodiments of the power-saving method, where the data receiving is undertaken by the receiving module 132 and the data sending is undertaken by the sending module 131, which are not repeated herein.

### User Equipment Embodiment 4

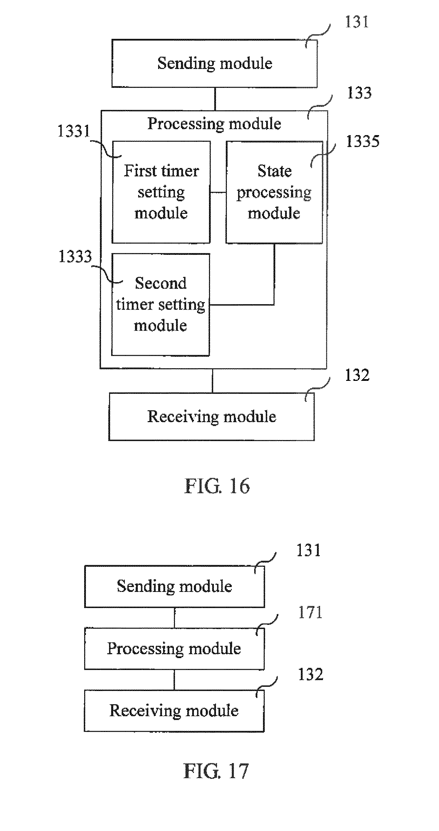

The user equipment provided in this embodiment can also save power. As shown in FIG 16, the user equipment provided in this embodiment includes:
a sending module 131, configured to send a scheduling request to a network side, and send data according to a newly transmitted data uplink grant that is received by a receiving module 132;
the receiving module 132, configured to receive the newly transmitted data uplink grant that is delivered by the network side according to the scheduling request; and
a processing module 133, specifically including:
   a first timer setting module 1331, configured to: after the sending module 131 sends the data, start an IT-disabled timer; restart the IT-disabled timer after it is determined that the sending module 131 fails to send the data; and, after the IT-disabled timer expires, notify a state processing module 1335;
   a second timer setting module 1333, configured to: after a set period arrives and/or after it is determined that the data is sent successfully, start an Inactivity Timer; and, after the Inactivity Timer expires, notify a state processing module 1335; and
   the state processing module 1335, configured to: set the UE to an inactive state after the sending module 131 sends the data; switch the UE to an active state after receiving an IT-disabled timer expiry notification from the first timer setting module 1331 and/or after it is determined that the data is sent successfully; and switch the UE to the inactive state after receiving a second timer expiry notification from the second timer setting module 1333.

In this embodiment, when the first timer setting module 1331, the second timer setting module 1332, and the state processing module 1335 implement the foregoing solution, reference may be made to the corresponding solutions in the embodiments of the power-saving method, where the data receiving is undertaken by the receiving module 132 and the data sending is undertaken by the sending module 131, which are not repeated herein.

### User Equipment Embodiments 5 to 8

Embodiments 5 to 8 of the user equipment correspond to Embodiments 1 to 4 of the user equipment respectively. The corresponding embodiment structure is basically the same, and a difference lies in that: In Embodiments 5 to 8 of the user equipment, the processing modules and state processing modules do not implement the operation of "setting the UE to an inactive state after the data is sent", but start an Inactivity Timer after a set period arrives and/or after it is determined that the data is sent successfully, and the user equipment according to Embodiments 5 to 8 can not only save power but also reduce the data transmission delay. The following describes Embodiment 5 of the user equipment as an example:

As shown in FIG. 17, the user equipment provided in Embodiment 5 includes:
a sending module 131, configured to send a scheduling request to a network side, and send data according to a newly transmitted data uplink grant that is received by a receiving module 131;
the receiving module 132, configured to receive the newly transmitted data uplink grant that is delivered by the network side according to the scheduling request; and
a processing module 171, configured to start an inactivity timer after a set period subsequent to the time when the sending module sends the data arrives and/or after it is determined that the data is sent successfully.

In this embodiment, the processing module 171 may be a processor. When implementing the foregoing solution, the processor may work according to Method Embodiment 2 or Method Embodiment 9, where the data receiving is undertaken by the receiving module 132 and the data sending is undertaken by the sending module 131, which is not repeated herein.

### User Equipment Embodiment 9

The user equipment provided in Embodiment 9 can reduce the data transmission delay of the user equipment. It includes a processing module, and the processing module may be a processor and is configured to: start an Inactivity Timer (Inactivity Timer), and, after the Inactivity Timer expires, determine whether the user equipment still has data that needs to be scheduled; if yes, keep the active state of the user equipment; and, if no, implement a DRX Cycle of the UE.

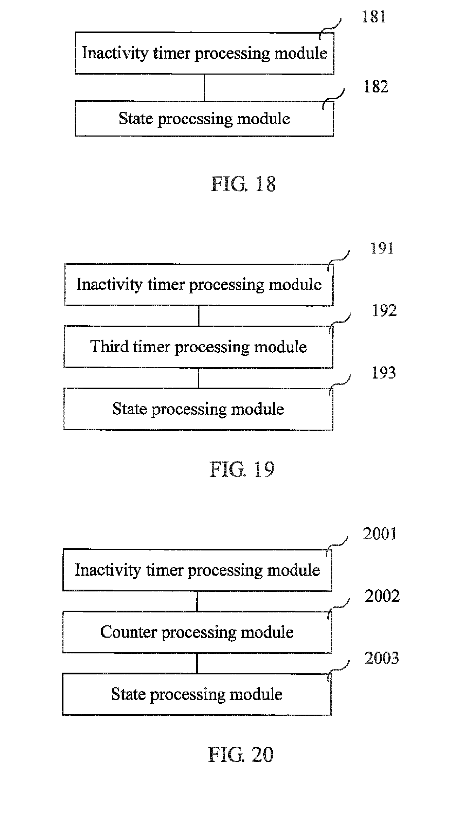

Specifically, as shown in FIG 18, the processing module may include an inactivity timer processing module 181 and a state processing module 182.

The inactivity timer processing module 181 is configured to start the Inactivity Timer, and notify the state processing module 182 after the Inactivity Timer expires.

The starting the Inactivity Timer herein may be starting the Inactivity Timer after the UE receives an UL Grant according to the prior art, or may be starting or restarting the Inactivity Timer according to any one of the preceding Method Embodiments 4 to 13 of the present invention.

The state processing module 182 is configured to: after receiving an Inactivity Timer expiry notification from the inactivity timer processing module 181, if it is determined that more data of the user equipment needs to be scheduled, keep the active state of the user equipment.

In this embodiment, when the state processing module 182 implements the above solution, reference may be made to any one of the preceding Method Embodiments 14 to 16, and no repeated description is given herein.

In this embodiment, when the Inactivity Timer expires but the UE still has data that needs to be sent, the UE remains active, thereby prolonging the active state of the UE, reducing the failure in scheduling data of the UE in time when the UE enters the inactive state after the Inactivity Timer expires, and reducing the occurrence of a long data transmission delay when the data is not scheduled in time.

### User Equipment Embodiment 10

The user equipment in Embodiment 10 can also reduce the data transmission delay of the user equipment. As shown in FIG 19, the user equipment provided in Embodiment 10 includes a processor, and the processor specifically includes:
an inactivity timer processing module 191, configured to start an Inactivity Timer, notify a state processing module 193 after the Inactivity Timer expires, and restart the Inactivity Timer after receiving a third timer expiry notification from a third timer processing module 192;
the third timer processing module 192, configured to start a third timer (that is, an IT restart timer) when the state processing module 193 determines that more data still needs to be scheduled, notify the inactivity timer processing module 191 after the IT restart timer expires, and stop the IT restart timer after the state processing module 193 determines that the UE receives a signaling that indicates newly transmitted uplink data; and
the state processing module 193, configured to: after receiving an Inactivity Timer expiry notification from the inactivity timer processing module 191, determine whether more data of the user equipment needs to be scheduled; if determining that no more data of the user equipment needs to be scheduled, control the UE to perform a DRX Cycle; if determining that more data of the user equipment needs to be scheduled, notify the third timer processing module; and, after determining that the UE receives a signaling that indicates newly transmitted uplink data, such as an UL Grant or a DL Assignment, notify the third timer processing module to stop the Inactivity Timer restart timer.

### User Equipment Embodiment 11

The user equipment in Embodiment 10 can also reduce the data transmission delay of the user equipment. As shown in FIG. 20, the user equipment provided in Embodiment 10 includes a processor, and the processor specifically includes:
an inactivity timer processing module 2001, configured to start an Inactivity Timer, notify a state processing module 2003 after the Inactivity Timer expires, and restart the Inactivity Timer according to a notification from a counter processing module 2002;
the counter processing module 2002, configured to: after the state processing module 2003 determines that the user equipment needs scheduling, determine whether an IT restart counter reaches a set maximum value; if determining that the IT restart counter does not reach the maximum value, notify the inactivity timer processing module 2001; or else, notify the state processing module 2003; and, after the inactivity timer is restarted, control the IT restart counter to increase its value by 1; and
the state processing module 2003, configured to: after receiving an Inactivity Timer expiry notification from the inactivity timer processing module 2001, determine whether more data of the user equipment needs to be scheduled; if determining that no more data of the user equipment needs to be scheduled, control the UE to perform a DRX Cycle; if determining that more data of the user equipment needs to be scheduled, notify the counter processing module; and control the UE to perform a DRX Cycle according to a notification from the counter processing module 2002.

Before receiving a BSR of the UE, the eNB is unaware of the amount of data buffered in the UE, and generally does not schedule more data transmitting resources for the UE. Therefore, the UE generally receives no scheduling command when being active. In addition, under different system loads, the eNB may respond to the BSR reported by the UE at different speeds. When the load is high, the response speed of the eNB is slow. Therefore, futile power consumption occurs if the UE stays active after sending the SR. In the foregoing embodiments of the user equipment intended for saving power, after the UE sends an SR, and receiving a newly transmitted data UL Grant sent by the network side according to the SR, the UE does not start an Inactivity Timer immediately, but first switches to an inactive state, and then starts the Inactivity Timer to switch the UE to an active state after the uplink data is sent successfully or a set period arrives. Because the UE is first switched to the inactive state, the power consumption of the UE is reduced, and energy is saved.

In the prior art, the Inactivity Timer starts up early and expires early, which makes the UE enter the inactive state early, thereby affecting the timeliness of scheduling and increasing the data transmission delay. In addition, when the UE always has data to be sent, the eNB can hardly schedule the data of the UE in time due to the system load. In this case, the UE may enter the inactive state due to expiry of the Inactivity Timer, which affects the timeliness of scheduling and increases the data transmission delay. In the foregoing user equipment embodiments intended for reducing a data transmission delay of a UE, a timer or a flag or the like is set to postpone the start time of the Inactivity Timer, or, when the Inactivity Timer expires but more data of the UE still needs to be sent, the Inactivity Timer is restarted or a new timer is started, thereby prolonging the active state of the UE in the data transmitting process, reducing the failure in scheduling data of the UE in time when the UE enters the inactive state after the Inactivity Timer expires, and reducing the occurrence of a long data transmission delay when the data is not scheduled in time. In addition, in the foregoing user equipment embodiments intended for reducing a data transmission delay of a UE, a maximum number of restarts of the Inactivity Timer is set to prolong the active state of the UE and reduce power consumption of the UE.

Although the present invention has been illustrated and described with reference to some exemplary embodiments of the present invention, it is understandable to persons of ordinary skill in the art that various modifications may be made to forms and details of the present invention without departing from the spirit and scope of the present invention.

## Claims

1. A state switching method, comprising:
sending, by a user equipment, a scheduling request to a network side, and receiving a newly transmitted data uplink grant that is delivered by the network side according to the scheduling request;
setting the user equipment to an inactive state after the user equipment sending data according to the uplink grant; and
switching the user equipment to an active state after a set period arrives and/or after it is determined that the data is sent successfully.

2. The method according to claim 1, wherein: the set period is implemented by setting a first timer; and when the user equipment is set to the inactive state, the first timer is started, and the set period arriving is that the first timer expires.

3. The method according to claim 2, wherein: after the first timer is started but before it expires, the method further comprises: restarting the first timer if the user equipment determines that the data is sent unsuccessfully.

4. The method according to claim 1 or 2, wherein, after the set period arrives and/or after it is determined that the data is sent successfully, the method further comprises: starting a second timer, and switching the user equipment to the inactive state after the second timer expires.

5. A user equipment, comprising:
a sending module, configured to send a scheduling request to a network side, and send data according to a newly transmitted data uplink grant that is received by a receiving module;
the receiving module, configured to receive the newly transmitted data uplink grant that is delivered by the network side according to the scheduling request; and
a processing module, configured to: set the user equipment to an inactive state after the sending module sends the data; and switch the user equipment to an active state after a set period arrives and/or after it is determined that the data is sent successfully.

6. The user equipment according to claim 5, wherein the processing module comprises:
a first timer setting module, configured to: after the sending module sends the data, start a first timer; and, after the first timer expires, notify a state processing module; and
the state processing module, configured to: set the user equipment to the inactive state after the sending module sends the data; and switch the user equipment to the active state after receiving a first timer expiry notification from the first timer setting module and/or after determining successful sending of the data.

7. The user equipment according to claim 6, wherein, the first timer setting module is further configured to restart the first timer after determining that the data is sent unsuccessfully.

8. The user equipment according to claim 5, wherein the processing module comprises:
a second timer setting module, configured to: after the set period arrives and/or after it is determined that the data is sent successfully, start a second timer; and, after the second timer expires, notify a state processing module;
the state processing module, configured to: set the user equipment to the inactive state after the sending module sends the data; switch the user equipment to the active state after the set period arrives and/or after it is determined that the data is sent successfully, and switch the user equipment to the inactive state after receiving a second timer expiry notification from the second timer setting module.

9. An inactivity timer starting method, comprising:
sending, by a user equipment, a scheduling request to a network side, receiving a newly transmitted data uplink grant that is delivered by the network side according to the scheduling request, and sending data according to the uplink grant; and
starting an inactivity timer after a set period arrives and/or after it is determined that the data is sent successfully.

10. A user equipment, comprising:
a sending module, configured to send a scheduling request to a network side, and send data according to a newly transmitted data uplink grant that is received by a receiving module;
the receiving module, configured to receive the newly transmitted data uplink grant that is delivered by the network side according to the scheduling request; and
a processing module, configured to start an inactivity timer after a set period subsequent to the time when the sending module sends the data arrives and/or after it is determined that the data is sent successfully.
